Europäisches Patentamt

European Patent Office

Office européen des brevets

(19)

(11) Veröffentlichungsnummer: **0 179 222**
**B1**

(12) # EUROPÄISCHE PATENTSCHRIFT

(45) Veröffentlichungstag der Patentschrift:
24.02.88

(21) Anmeldenummer: 85110409.1

(22) Anmeldetag: 20.08.85

(51) Int. Cl.⁴: **B 23 D 25/14**

(54) **Schrottschere.**

(30) Priorität: 25.10.84 DE 3439002

(43) Veröffentlichungstag der Anmeldung:
30.04.86 Patentblatt 86/18

(45) Bekanntmachung des Hinweises auf die Patenterteilung:
24.02.88 Patentblatt 88/8

(84) Benannte Vertragsstaaten:
DE FR GB IT NL

(56) Entgegenhaltungen:
AU-A-85 554
DE-B-1 752 244
DE-B-2 453 756

(73) Patentinhaber: **Lindemann Maschinenfabrik GmbH, Erkrather Strasse 401, D-4000 Düsseldorf 1 (DE)**

(72) Erfinder: **Quante, Siegfried, Heideweg 54, D-4000 Düsseldorf/Baumberg (DE)**
Erfinder: **Greiner, Gabriele, Niersstrasse 23, D-4050 Mönchengladbach 4 (DE)**

(74) Vertreter: **Bergen, Klaus, Dipl.- Ing., Patentanwälte Dr.- Ing. Reimar König Dipl.- Ing. Klaus Bergen Wilhelm- Tell- Strasse 14 Postfach 260162, D-4000 Düsseldorf 1 (DE)**

EP 0 179 222 B1

## Beschreibung

Die Erfindung bezieht sich auf eine Schrottschere mit einer deren Messern vorgeordneten Zuführmulde zum Sammeln und Verdichten des Schneidguts mit einer als Seitendruckstempel ausgebildeten Längswand und einem die Mulde teilweise überdeckenden Deckel.

Bei Schrottscheren der vorerwähnten Art besteht seit langem das Problem, daß der Schrott in sehr unterschiedlicher Stückgröße anfällt. So fällt in der Praxis einerseits kleinstückiger Sammelschrott und andererseits sperriger, insbesondere großflächiger Grobschrott beispielsweise beim Abwracken von Schiffsrümpfen an. Dementsprechend sind die herkömmlichen Schrottscheren entweder für kleinstückigen oder für grobstückigen Schrott ausgelegt, d.h. sie besitzen eine der jeweiligen Stückgröße angepaßte Zuführmulde und Messeröffnung.

Sammelschrott-Scheren arbeiten dabei normalerweise mit einer Vorverdichtung, die den lose in die Zuführmulde eingebrachten Schrott zunächst mit Hilfe eines Muldendeckels und gegebenenfalls auch eines Seitendruckstempels zu einem mehr oder minder kompakten Schrottstrang verdichtet, der alsdann mit Hilfe eines in Muldenlängsrichtung verfahrbaren Förderstempels schrittweise in die Messeröffnung vorgeschoben und dort der jeweiligen Schrittlänge entsprechend zerkleinert wird. Für eine Verarbeitung von die Abmessungen der Zuführmulde überschreitendem Grobschrott eignen sich solche Schrottscheren schon deswegen nicht, weil der zum Vorverdichten dienende Seitendruckstempel derartige Schrottstücke nicht erfassen und daher auch nicht verdichten kann. Das macht entweder ein Vorzerkleinern des Grobschrotts durch Brennschneiden oder die Verwendung einer Grobschrott- und einer Sammelschrottschere erforderlich. Da jedoch die beiden Schrottfraktionen in sehr unterschiedlichen Mengenanteilen anfallen, ergibt sich keine optimale Auslastung beider Scheren.

Bekannt sind auch spezielle Schiffsabwrackscheren mit einer Hauptschere zum Vorzerkleinern des Grobschrotts zu langen schmalen Streifen, die nach dem Schneiden zur weiteren Zerkleinerung in die Zuführmulde einer Querschere fallen. Derartige Zweimulden-Scheren arbeiten zwar zufriedenstellend und erlauben mit ihrer zweiten Schere auch die Verarbeitung von Sammelschrott. Das ist jedoch wegen der dabei unbenutzt bleibenden Hauptschere äußerst unwirtschaftlich.

Es ist aus der DE-AS 24 56 169 auch bereits eine Schere bekannt, bei der einerseits an der Längskante einer Schiebemulde und andererseits an der Unterkante eines Stempels, der die Schiebemulde oben abdeckt, Schermesser angeordnet sind. Oberhalb der Schiebemulde seitlich versetzt besitzt diese Schere eine Kammer zum Sammeln und Verdichten von Schrott, in der ein weiterer beweglicher Stempel das in die Kammer aufgegebene Material verdichtet. Der so gepreßte Schrottstrang wird alsdann in eine unterhalb angeordnete Schiebemulde eingebracht und von dort aus ins Scherenmaul geschoben. Sofern bei dem in die Schiebemulde überführten Schrottstrang noch kleinere Materialteile überstehen, wird dem dadurch abgeholfen, daß die Kanten der Schiebemulde und des Stempels mit Schermessern ausgerüstet sind, die jedoch mit den eigentlichen, von der Schere zu vollziehenden Schnitten nichts zu tun haben und deshalb auch nicht weiter erläutert sind.

Der Erfindung liegt die Aufgabe zugrunde, die vorerwähnten Nachteile zu vermeiden und insbesondere eine Schere zu schaffen, die sich sowohl mit Sammel- als auch mit Grobschrott, beispielsweise Schiffsabwrackteilen, insbesondere -wänden beschicken läßt und zudem gegebenenfalls auch ein Vorverdichten erlaubt. Die Lösung dieser Aufgabe basiert auf dem Gedanken, einer einzigen Zuführmulde je ein Messerpaar für Sammel- und für Grobschrott zuzuordnen.

Im einzelnen besteht die Erfindung darin, daß bei einer Schrottschere der eingangs erwähnten Art erfindungsgemäß der Deckel oder ein separater Messerträger und der Seitendruckstempel miteinander korrespondierende Grobgutmesser aufweisen, von denen eines schräg gegen das andere verfahrbar und vorzugsweise auch anstellbar ist. Die Grobgutmesser werden nur insoweit benutzt, wie Grobschrott anfällt; sie geben den vorzerkleinerten Grobschrott an die ansonsten nur oder auch gleichzeitig mit kleinstückigem Sammelschrott beschickte einzige Zuführmulde der Schere mit ihren kopfseitigen Hauptmessern ab.

Vorzugsweise ist der Muldendeckel beweglich angeordnet. Auf diese Weise läßt sich Grobschrott mit Hilfe eines Krans zwischen die entsprechend dimensionierten Grobschrottmesser bringen und zunächst muldengerecht zerkleinern. Die abgescherten Grobschrottstücke sammeln sich in der an der Grobschrottmesseröffnung befindlichen Zuführmulde und können mit Hilfe eines längsbeweglichen Förderschiebers den am Kopfende der Mulde befindlichen Hauptmessern zugeführt werden.

Der Muldendeckel kann um eine zur Muldenlängsachse parallele Achse verschwenkbar gelagert sein. Auf diese Weise lassen sich sowohl der Muldendeckel als auch der Seitendruckstempel zum Vorverdichten des in der Mulde befindlichen Schrotts als auch zum Schneiden des Grobschrotts verwenden, ohne daß außer den zusätzlichen Grobschrottmessern ein nennenswerter baulicher Aufwand erforderlich wäre. Zudem lassen sich mit Hilfe des Deckels und des verfahrbaren Seitendruckstempels die Muldenbreite überragende Reststücke des Grobschrotts, die sich nicht mehr abscheren lassen, durch wechselseitiges Betätigen des Deckels und des Stempels muldengerecht zusammenpressen.

Der Muldendeckel kann jedoch auch zum Abscheren des Grobschrotts horizontal verschiebbar gelagert sein. Andererseits kann das betreffende Messer aber auch an einem separaten Messerträger angeordnet sein, der nur beim Zerkleinern von Grobschrott in die Schneidposition gebracht wird, ansonsten aber außerhalb der Schere verbleibt. In diesem Falle sollten der Messerträger und die Zuführmulde Kupplungselemente zum Arretieren des Messerträgers an der Schrottschere aufweisen. Vorzugsweise ist die messerabgewandte Längsseite des Messerträgers gegen den Muldendeckel abgestützt.

Um ein ziehendes Schneiden zu ermöglichen, bei dem die Schnittkraft bzw. der Schnittdruck über die Länge der Schermesser nicht gleichzeitig wirkt, sondern vom einen zum anderen Ende fortschreitet, verlaufen die Grobschrottmesser vorzugsweise winklig zueinander. Dazu ist eines der Grobschrottmesser anstellbar angeordnet; so kann ein Grobschrottmesser auf einer Schwenkachse gelagert und mit einem Schwenkantrieb verbunden sein, der ein schrottgerechtes Einstellen des Schneidwinkels zwischen den Messern erlaubt. Andererseits kann aber auch der mit dem Grobschrottmesser versehene Seitendruckstempel um eine quer zur Schneidebene verlaufende Achse verschwenkbar gelagert sein. In seiner Schrägstellung erlaubt der Seitendruckstempel dann ein ziehendes Schneiden, während er in seiner Geradstellung parallel zur Muldenlängsachse ein übliches Vorverdichten des Muldenguts ermöglicht.

Insgesamt erlaubt das anstellbare Grobgutmesser das Einstellen optimaler Schneidverhältnisse unter Berücksichtigung der Natur des jeweils zu zerkleinernden Grobschrotts. Auf diese Weise läßt sich zudem auch ein Grobschrott mit hoher Eigensteifigkeit und hohem Widerstandsmoment problemlos mit etwa derselben Antriebs- bzw. Scherkraft zerkleinern wie der Sammelschrott.

Schließlich kann die Schere im Bereich der Grobschrottmesser auch noch mit mindestens einem Spannzylinder für den Grobschrott und die Zuführmulde mit einem längsbeweglichen Förderschieber versehen sein.

Die Erfindung wird nachfolgend anhand von in der Zeichnung dargestellten Ausführungsbeispielen des näheren erläutert. In der Zeichnung zeigen:

Fig. 1 einen Längsschnitt durch eine Schrottschere mit Vorverdichtung,

Fig. 2 einen Schnitt nach der Linie II-II in Fig. 1,

Fig. 3 den Schnitt der Fig. 2 in der Schneidposition für Grobschrott,

Fig. 4 eine Draufsicht auf die Schere der Fig. 1 mit geöffnetem Deckel,

Fig. 5 eine Draufsicht auf eine Schrottschere mit verstellbarem Grobschrottmesser,

Fig. 6 eine Draufsicht auf eine Schrottschere mit einem Seitendruckstempel,

Fig. 7 einen Querschnitt einer Schrottschere mit einsetzbarem Messerträger,

Fig. 8 einen Schnitt nach der Linie VIII-VIII in Fig. 11 mit der Befestigung des Messerträgers der Fig. 7 an der Schere,

Fig. 9 einen Schnitt gemäß Fig. 7 mit dem Messerträger in der Schneidposition,

Fig. 10 eine der Fig. 9 entsprechende Darstellung mit dem Messerträger in einer anderen Schneidposition und

Fig. 11 eine Draufsicht auf die Schere der Fig. 9.

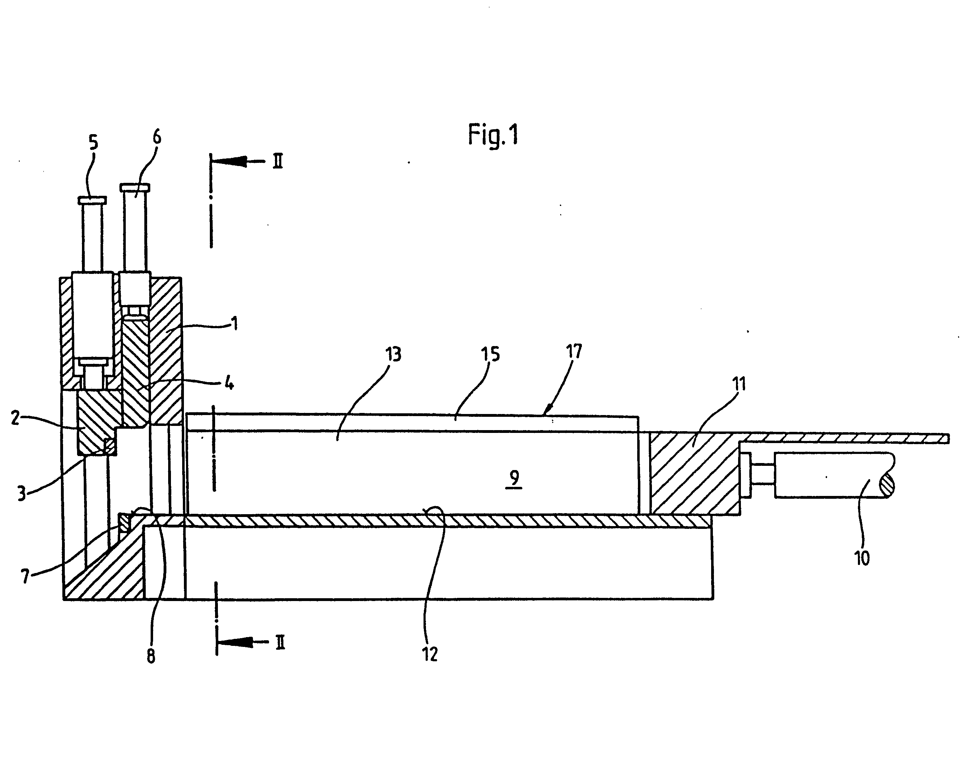

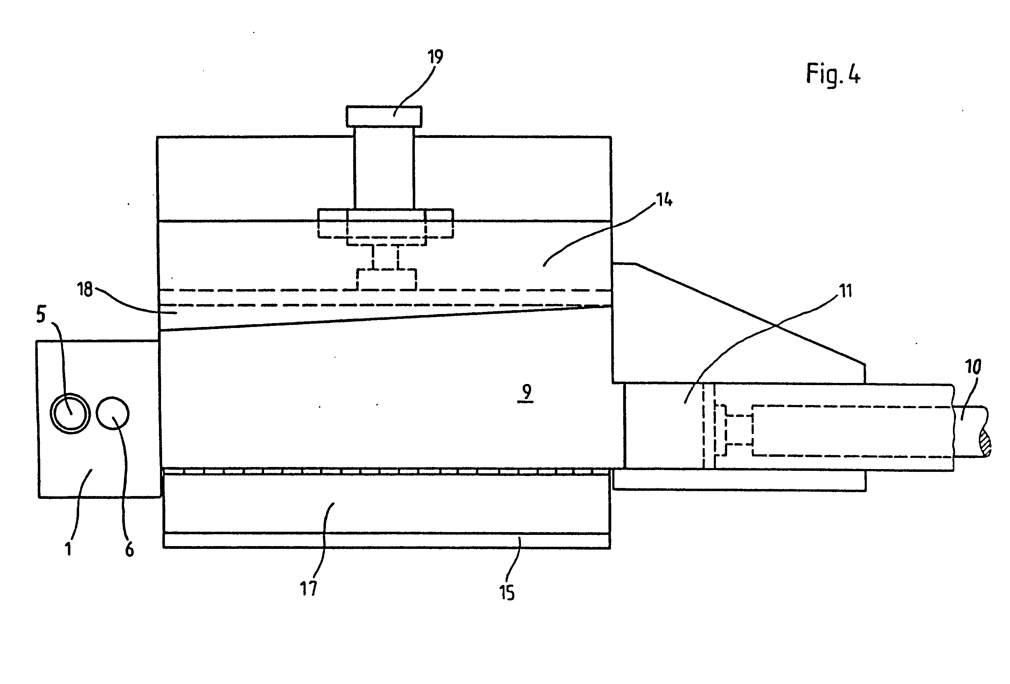

Die Schrottschere nach Fig. 1 bis 6 besteht aus einem Scherenständer 1 in Form eines Portals, in dem der Träger 2 des Obermessers 3 und parallel dazu ein zugleich als Niederhalter dienender, dem Obermesser vorgeschalteter Stampfer 4 vertikal beweglich angeordnet sind. Dem Obermesserträger 2 und dem Stampfer 4 sind doppelt wirkende hydraulische Zylinder-Kolbenantriebe 5 und 6 zugeordnet; es arbeitet mit einem feststehenden Untermesser 7 zusammen. Unterhalb der Stirnfläche des Stampfers und Niederhalters 4 befindet sich ein Tisch 8, auf dem das nach dem Niederfahren des Stampfers 4 vertikal zusammengequetschte oder mindestens niedergehaltene Material ruht.

Dem Scherenständer 1 und damit den Hauptmessern 3, 7 ist eine Zuführmulde 9 zum Vorverdichten vorgeordnet, in der ein mit einem doppelt wirkenden hydraulischen Antrieb 10 verbundener längsbeweglicher Förderschieber 11 gelagert ist. Dieser Stempel dient dazu, das Füllgut schrittweise in die Messeröffnung der Schere vorzuschieben. Die oben offene Zuführmulde 9 besteht aus einem festen Boden 12, einer ebenfalls festen Längsseitenwand 13 und einer beweglichen Längsseitenwand in Gestalt eines beweglichen Seitendruckstempels 14.

Bei dem in den Fig. 1 bis 4 dargestellten Ausführungsbeispiel ist das eine der miteinander korrespondierenden Grobschrottmesser 15 an einem um eine Achse 16 verschwenkbaren Deckel 17 angeordnet und das andere schräg angestellte Grobgutmesser 18 an dem Seitendruckstempel 14. Der Antrieb des Seitendruckstempels 14 besteht aus einem doppelt wirkenden hydraulischen Zylinder-Kolbenantrieb 19 und der des Deckels 17 aus einem in einem Gelenk 20 an einem Arm 21 gelagerten hydraulischen Zylinder-Kolbentrieb 22 zum Verschwenken. Mit Hilfe des Deckels 17 lassen sich abgescherte Grobschrottstücke vertikal nach unten in den Bereich der Mulde 9 drücken, wenn sie sich unter der Wirkung des Förderschiebers 11 nach oben vorwölben.

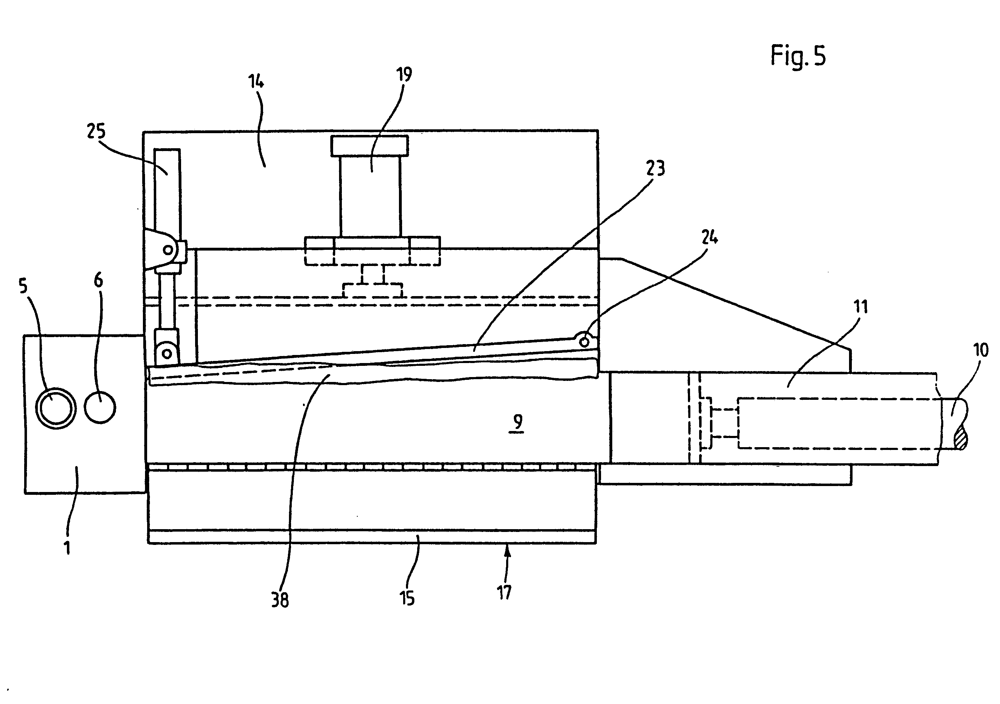

Bei dem Ausführungsbeispiel gemäß Fig. 5 ist ein verstellbares Grobschrottmesser 23 am Seitendruckstempel 14 um eine seine Unterlage rechtwinklig durchdringende Schwenkachse 24 gelagert und mit einem Schwenkantrieb 25 verbunden.

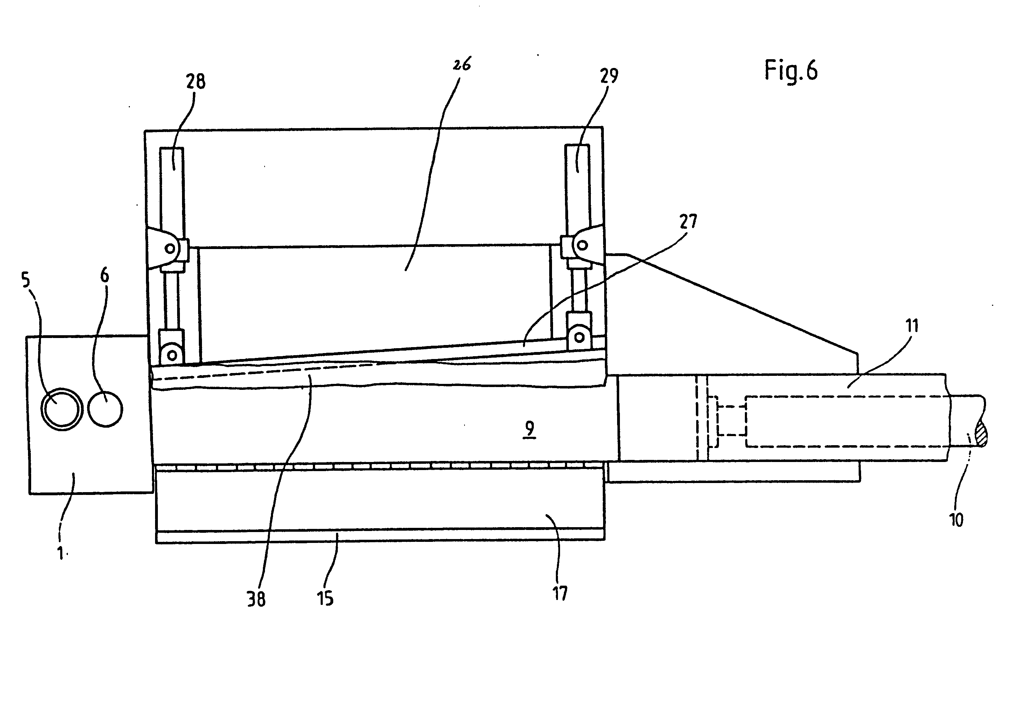

Bei der Bauweise nach Fig. 6 wird ein an einem Seitendruckstempel 26 angeordnetes Grobschrottmesser 27 durch Schrägstellen des ganzen Stempels mittels hydraulischer Zylinder 28, 29 verstellt.

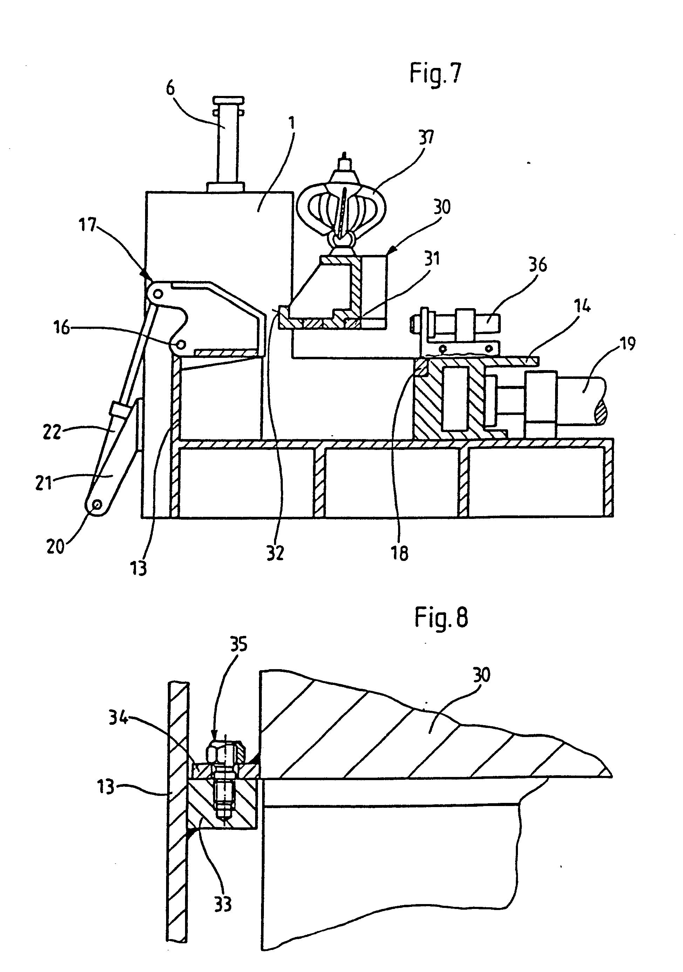

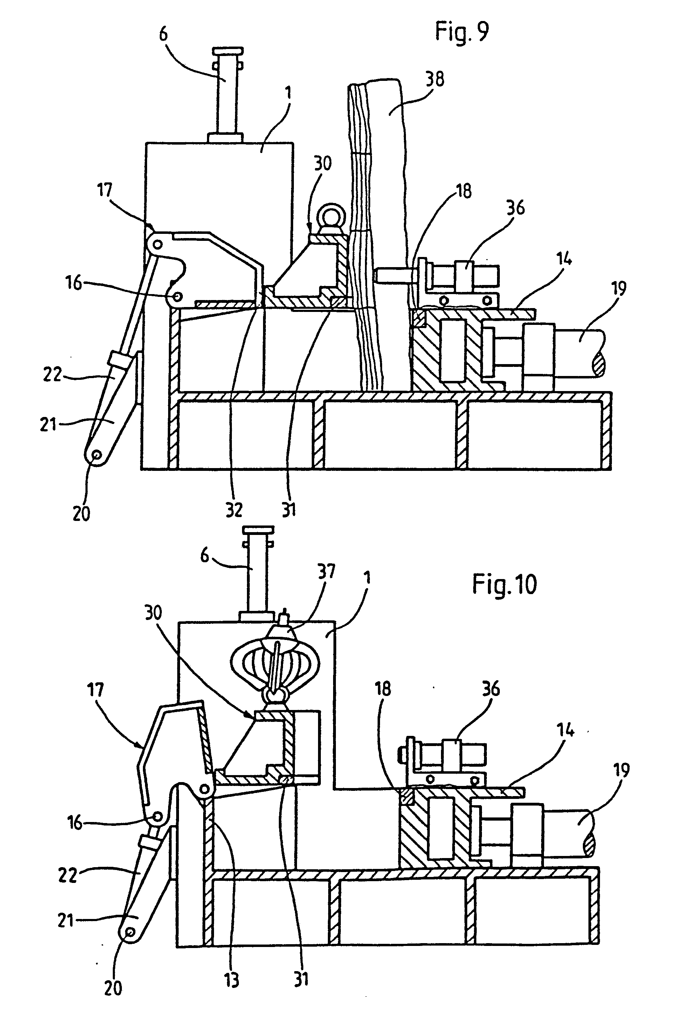

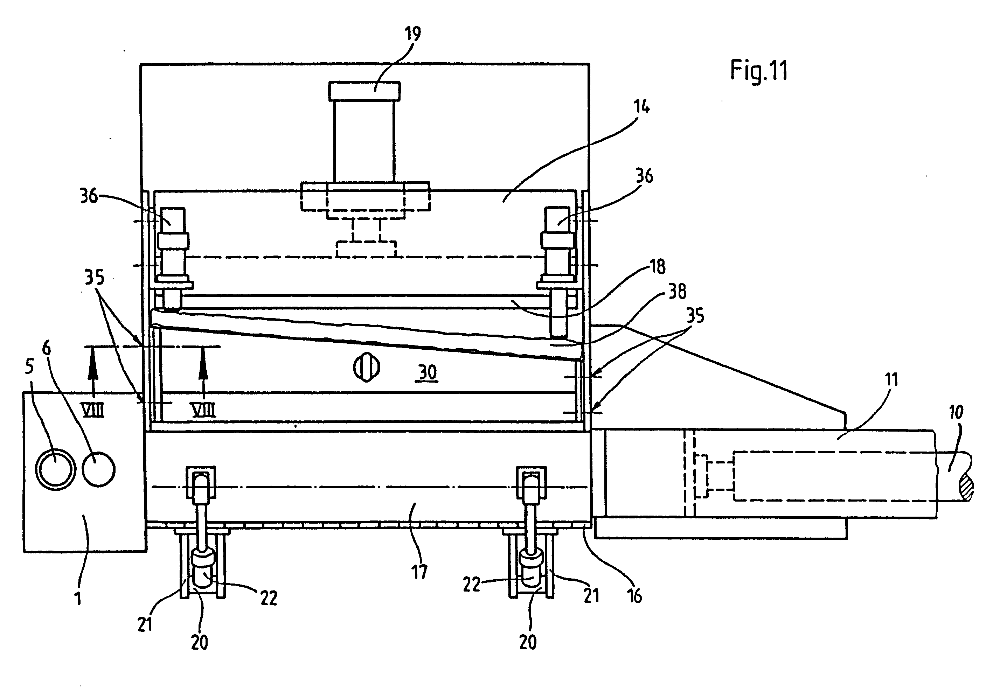

Die Schrottschere nach den Fig. 7 bis 11 weist einen separaten Träger 30 für ein schräg verlaufendes Grobschrottmesser 31 auf. Dieser Messerträger besitzt an seiner messerabgewandten Seite eine Anschlagleiste 32, mit der er entweder an dem heruntergeklappten Muldendeckel 17 (Fig. 9) oder an der Muldenlängsseitenwand 13 (Fig. 10) anliegt. Um den Messerträger in der Scherposition zu arretieren, befindet sich an der Muldenwand 13 eine Konsole 33. Auf dieser Konsole ruht in der Schneidposition eine Halteleiste 34 des Messerträgers 30 und ist dort durch Arretierschrauben 35 festgelegt. Des weiteren sind bei der Schrottschere nach den Fig. 7 bis 11 auf dem Seitendruckstempel 14 Spannzylinder 36 zum Festhalten des Grobschrotts während des Zerkleinerns angeordnet.

Die Verwendung eines separaten Messerträgers empfiehlt sich dann, wenn der Grobschrottanfall nur gering ist und die Schere daher überwiegend mit Sammelschrott beschickt wird. In diesem Falle ist es vorteilhaft, wenn sich das unter bestimmten Voraussetzungen störende stationäre Schrägmesser 31 entfernen läßt.

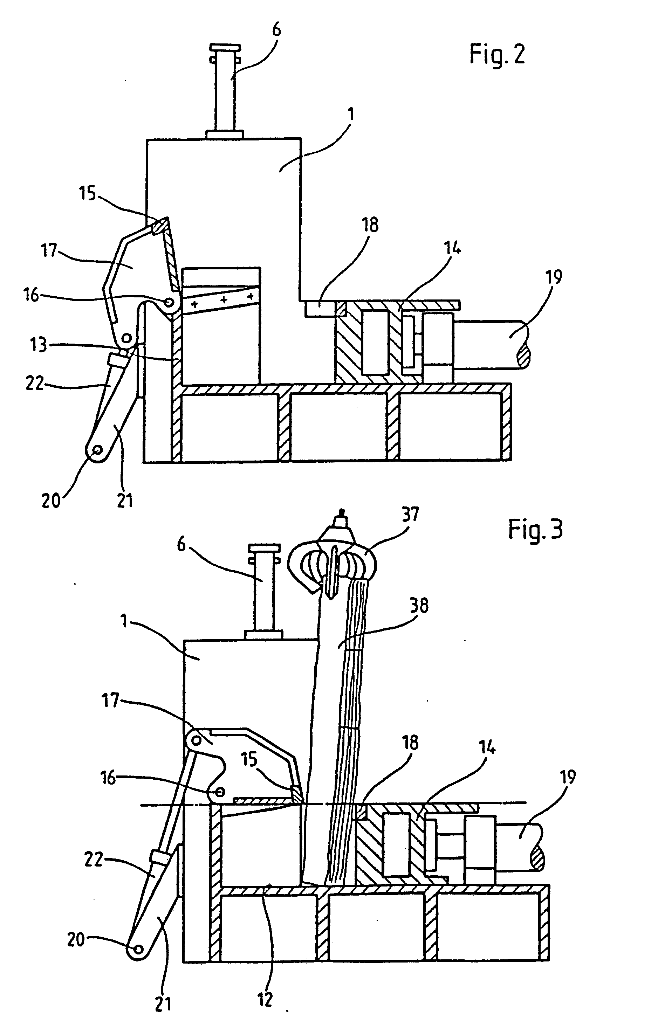

Die erfindungsgemäße Schrottschere läßt sich in der Weise betreiben, daß mit Hilfe eines Krangreifers 37 zunächst ein Grobschrottstück 38 in die Öffnung zwischen den Grobschrottmessern 15, 18 an dem heruntergeklappten Muldendeckel 17 und dem nach auswärts gefahrenen Seitendruckstempel 14 gebracht und auf dem Muldenboden 12 abgesetzt wird, wie das in Fig. 3 dargestellt ist. Alsdann wird der Seitendruckstempel 14 in Richtung auf die Mulde verfahren, bis das Messer 18 im hauptmessernahen Bereich auf das Schrottstück 38 trifft und dieses zusammen mit dem Gegenmesser 15 ziehend unterteilt. Das dabei abgescherte Teilstück fällt auf den Boden 12 der Zuführmulde 9 und läßt sich alsdann mit Hilfe des Förderschiebers 11 der Hauptmesseröffnung am Kopfende der Mulde zuführen. Nach Absenken des Schrottstücks 38 mit Hilfe des Greifers 37 wiederholt sich der zuvor geschilderte Schnitt bis das Schrottstück insgesamt unterteilt ist.

Die einzelnen Teilstücke lassen sich in der Mulde 9 auch mit Hilfe des Seitendruckstempels 14 verdichten. Dazu ist es jedoch bei dem Ausführungsbeispiel nach den Fig. 5 und 6 erforderlich, das schräg verlaufende bewegliche Grobschrottmesser 27 zunächst mit Hilfe des Messerantriebs parallel zur Muldenlängsachse bzw. der Muldenlängsseitenwand einzustellen.

Die Ausführungsbeispiele zeigen, wie sich bei einer erfindungsgemäßen Schrottschere Grobschrott vorzerkleinern und alsdann wie Sammelschrott verdichten und fertig zerkleinern läßt. Der bauliche Aufwand dafür ist äußerst gering und besteht im wesentlichen darin, daß zwei zusätzliche Grobschrottmesser in eine herkömmliche Schrottschere integriert sind, was praktisch nur Anpassungsänderungen erfordert.

**Patentansprüche**

1. Schrottschere mit einer deren Messern (3, 7) vorgeordneten Zuführmulde (9) zum Sammeln und Verdichten des Schneidguts mit einer als Seitendruckstempel (14) ausgebildeten Längswand und einem die Mulde (9) mindestens teilweise überdeckenden Deckel (17), dadurch gekennzeichnet, daß der Deckel (17) oder ein separater Messerträger (30) und der Seitendruckstempel (14) miteinander korrespondierende Grobgutmesser (15, 18, 23, 27, 31) aufweisen, von denen mindestens eines schräg gegen das andere verfahrbar gelagert ist.

2. Schrottschere nach Anspruch 1, dadurch gekennzeichnet, daß ein Grobgutmesser (23, 27) schräg anstellbar oder schräg in bezug auf das Gegenmesser gelagert ist.

3. Schrottschere nach Anspruch 1 oder 2, dadurch gekennzeichnet, daß der Muldendeckel (17) beweglich angeordnet ist.

4. Schrottschere nach einem der Ansprüche 1 bis 3, dadurch gekennzeichnet, daß der Muldendeckel (17) horizontal verschiebbar gelagert ist.

5. Schrottschere nach einem der Ansprüche 1 bis 3, dadurch gekennzeichnet, daß der Muldendeckel (17) um eine zur Muldenlängsachse parallele Achse (16) verschwenkbar gelagert ist.

6. Schrottschere nach Anspruch 1 oder 2, dadurch gekennzeichnet, daß der Messerträger (30) und die Zuführmulde (9) mit Kupplungselementen (33, 34, 35) versehen sind.

7. Schrottschere nach Anspruch 6, dadurch gekennzeichnet, daß die messerabgewandte Längsseite des Messerträgers (30) gegen den Muldendeckel (17) abgestützt ist.

8. Schrottschere nach einem oder mehreren der Ansprüche 1 bis 7, dadurch gekennzeichnet, daß das anstellbare Grobgutmesser (23) auf einer Schwenkachse (24) gelagert und mit einem Schwenkantrieb (25) verbunden ist.

9. Schrottschere nach einem oder mehreren der Ansprüche 1 bis 7, dadurch gekennzeichnet, daß der Seitendruckstempel (26) um eine quer zur Schneidebene verlaufende Achse verschwenkbar gelagert ist.

10. Schrottschere nach einem oder mehreren der Ansprüche 1 bis 9, gekennzeichnet durch mindestens einen dem ortsfesten Grobgutmesser (15, 31) gegenüberliegenden Spannzylinder (36).

11. Schrottschere nach einem oder mehreren der Ansprüche 1 bis 10, gekennzeichnet durch einen in der Zuführmulde (9) längsbeweglichen Förderschieber (11).

## Claims

Scrap shearing machine comprising a feed trough (9), disposed in front of its knives (3, 7), for collecting and compacting the material to be sheared and having one longitudinal wall constructed as a lateral pressing plunger (14) and a lid (17) at least partly covering the trough (9), characterized in that the lid (17) or a separate knife carrier (30) and the lateral pressing plunger (14) possess mutually corresponding large scrap knives (15, 18, 23, 27, 31), of which at least one is mounted so that it can be travelled obliquely against the other.

2. Scrap shearing machine according to Claim 1, characterized in that a large scrap knife (23, 27) is mounted obliquely adjustable or oblique relative to the counter-knife.

3. Scrap shearing machine according to Claim 1 or 2, characterized in that the trough lid (17) is moveably mounted.

4. Scrap shearing machines according to Claims 1 to 3, characterized in that the trough lid (17) is mounted horizontally slidable.

5. Scrap shearing machine according to one of Claims 1 to 3, characterized in that the trough lid (17) is mounted pivotal about an axis (16) parallel to the longitudinal axis of the trough.

6. Scrap shearing machine according to Claim 1 or 2, characterized in that the knife carrier (30) and the feed trough (9) are equipped with coupling elements (33, 34, 35).

7. Scrap shearing machine according to Claim 6, characterized in that the longitudinal side of the knife carrier (30) remote from the knife is supported against the trough lid (17).

8. Scrap shearing machine according to one or more of Claims 1 to 7, characterized in that the obliquely adjustable large scrap knife (23) is mounted on a pivot axis (24) and connected with a pivoting drive (25).

9. Scrap shearing machine according to one or more of Claims 1 to 7, characterized in that the lateral pressing plunger (26) is mounted pivotal about an axis transverse to the cutting plane.

10. Scrap shearing machine according to one or more of Claims 1 to 9, characterized by at least one clamping cylinder (36) situated opposite the stationary large scrap knife (15, 31).

11. Scrap shearing machine according to one or more of Claims 1 to 10, characterized by a feed pusher (11) longitudinally moveable in the feed trough (9).

## Revendications

1. Cisaille à ferrailles comportant une cuve d'amenée (9) située en avant de ses arêtes coupantes (3, 7) pour l'accumulation et le tassement des matières à couper et comportant une paroi longitudinale constituée par un poussoir latéral 14) et un couvercle (17) recouvrant partiellement la cuve (9), caractérisée en ce que le couvercle (17) ou un support d'arête coupante séparé (30) et le poussoir latéral (14) comportent des arêtes coupantes (15, 18, 23, 27, 31) pour gros morceaux qui se correspondent et dont l'une au moins est montée de manière à pouvoir se déplacer obliquement par rapport à l'autre.

2. Cisaille à ferrailles selon la revendication 1, caractérisée en ce qu'une arête coupante (27) pour gros morceaux est montée de manière à pouvoir être placée obliquement ou à être orientée obliquement par rapport à la contre-arête coupante.

3. Cisaille à ferrailles selon l'une des revendications 1 ou 2, caractérisée en ce que le couvercle (17) de la cuve est monté de manière à être mobile.

4. Cisaille à ferrailles selon l'une des revendications 1 à 3, caractérisée en ce que le couvcrele (17) de la cuve est monté de manière à pouvoir se déplacer horizontalement.

5. Cisaille à ferrailles sejon l'une des revendications 1 à 3, caractérisée en ce que le couvercle (17) de la cuve est monté de manière à pouvoir tourner autour d'un axe (16) parallèle à l'axe longitudinal de la cuve.

6. Cisaille à ferrailles selon l'une des revendications 1 ou 2, caractérisée en ce que le support d'arête (30) et la cuve d'amenée (9) sont munis d'éléments d'accouplement (33, 34, 35).

7. Cisaille à ferrailles selon la revendication 6, caractérisée en ce que le côté longitudinal du support d'arête coupante (30) qui est le plus éloigné de l'arête coupante prend appui contre le couvercle (17) de la cuve.

8. Cisaille à ferrailles selon l'une ou plusieurs des revendications 1 à 7, caractérisée en ce que l'arête coupante mobile (23) pour gros morceaux est montée sur un axe de pivotement (24) et reliée à un dispositif d'entraînement (25) assurant son pivotement.

9. Cisaille à ferrailles selon l'une ou plusieurs des revendications 1 à 7, caractérisée en ce que le poussoir latéral (26) est monté de manière à pouvoir pivoter autour d'un axe orienté transversalement par rapport au plan de coupe.

10. Cisaille à ferrailles selon l'une ou plusieurs des revendications 1 à 9, caractérisée en ce qu'elle comprend au moins un vérin de serrage (36) situé en face de l'arête coupante fixe (15, 31) pour gros morceaux.

11. Cisaille à ferrailles selon l'une ou plusieurs des revendications 1 à 10, caractérisée en ce qu'elle comprend un poussoir de transport (11) qui peut se déplacer dans le sens longitudinal à l'intérieur de la cuve d'amenée (9).

Fig.1

Fig. 2

Fig. 3

3

Fig. 4

0 179 222

Fig. 5

0179 222

Fig.6

0 179 222

Fig. 7

Fig. 8

Fig. 9

Fig. 10

Fig.11